# EUROPÄISCHE PATENTSCHRIFT

(11) **EP 2 444 709 B1**
(45) Veröffentlichungstag und Bekanntmachung des Hinweises auf die Patenterteilung: **06.05.2015**
(21) Anmeldenummer: 11001682.1
(22) Anmeldetag: 01.03.2011
(51) Int. Cl.: F16L 25/00, F16L 37/00, F16L 37/14, F24F 13/02

(54) **Kupplungsmuffe**
Coupling sleeve
Manchon d'accouplement

(30) Priorität: 19.10.2010 DE 202010014480 U
(43) Veröffentlichungstag der Anmeldung: 25.04.2012
(73) Patentinhaber: Zehnder Group International AG, 5722 Gränichen (CH)
(72) Erfinder: Thoma, Urs, 8752 Näfels (CH)
(74) Vertreter: Stenger, Watzke & Ring

(56) Entgegenhaltungen:
- EP-A1- 1 471 313
- EP-A2- 1 777 468
- EP-B1- 1 375 993
- DE-U1-202005 003 475
- DE-U1-202005 006 242
- DE-U1-202009 013 033
- GB-A- 2 425 348

## Beschreibung

Die Erfindung betrifft ein System zur Fluid-, insbesondere Luftverteilung, gemäß dem Oberbegriff von Anspruch 1. Ein derartiges System ist bekannt aus der DE 20 2005 006 242 U1.

Eine Kupplungsmuffe für gewellt ausgebildete Rohre ist aus der EP 1 375 993 B1 bekannt geworden. Die hier beschriebene Kupplungsmuffe dient dazu, zwei gewellt ausgebildete Rohre stirnseitig miteinander zu verbinden. Diese Kupplungsmuffe kann gemäß einer besonderen Ausführungsform auch dazu genutzt werden, ein gewellt ausgebildetes Rohr an einen Verteilraum anzuschließen.

Die aus der EP 1 375 993 B1 vorbekannte Konstruktion findet insbesondere in Heiz- und/oder Belüftungssystemen Verwendung. Dabei dienen die gewellt ausgebildeten Rohre insbesondere zur Hindurchführung von Luft, wobei es sich sowohl um Frischluft als auch um Abluft handeln kann. Derartige Heiz- und/oder Belüftungssysteme dienen insbesondere dazu, Gebäude oder Teile hier von mit Luft zu versorgen bzw. verbrauchte Luft zur Abgabe an die Umgebung abzuleiten. Dabei umfasst das System nicht nur Rohre, sondern auch Verteilräume bereitstellende Gehäuse, in die die Rohre typischer Weise münden. Für den Anschluss eines Rohres an ein solches Gehäuse dient eine Kupplungsmuffe, wie sie beispielsweise aus der EP 1 375 993 B1 bekannt geworden ist.

Obgleich sich die aus dem Stand der Technik nach der EP 1 375 993 B1 bekannte Konstruktion im alltäglichen Praxiseinsatz bewährt hat, besteht Verbesserungsbedarf, insbesondere mit Blick auf eine vereinfachte Handhabung bei einer Montage. Es ist deshalb die Aufgabe der Erfindung, eine gegenüber dem Stand der Technik verbesserte Konstruktion vorzuschlagen, die sich insbesondere durch eine vereinfachte Handhabung bei der Montage auszeichnet.

Zur Lösung der vorstehenden Aufgabe wird mit der Erfindung ein System zur Fluidverteilung mit den Merkmalen von Anspruch 1 vorgeschlagen.

Es wird ferner vorgeschlagen eine Kupplungsmuffe der eingangsgenannten Art, die sich dadurch auszeichnet, dass die Anschlussplatte und der Anschlussstutzen einstückig vorzugsweise aus Kunststoff ausgebildet sind.

Mit der Erfindung wird gegenüber der aus dem Stand der Technik bekannten Konstruktion eine Bauteiltreduzierung erreicht. Darüber hinaus ergibt sich ein Baukastensystem, was es gestattet, unterschiedlichen Einbauanforderungen in einfacher Weise gerecht werden zu können. Es ist insbesondere die Verwendung nur einer Kupplungsmuffe möglich, die wahlweise mit unterschiedlichen Gehäusetypen kombiniert werden kann. Damit ergibt sich eine Vereinfachung sowohl in der Handhabung, als auch im Besonderen bei der Montage vor Ort.

Die Kupplungsmuffe ist bevorzugter Weise als einstückiges Bauteil aus Kunststoff ausgebildet. Sie stellt einen Anschlussstutzen einerseits und eine Anschlussplatte andererseits bereit. Dabei dient die Anschlussplatte zur Anordnung der Kupplungsmuffe an ein Gehäuse. Der Anschlussstutzen dient der Aufnahme eines gewellt ausgebildeten Rohres.

Die Kupplungsmuffe ist verdrehfest am Gehäuse befestigt. Das Gehäuse weist am Befestigungsort eine korrespondierend zum Anschlussstutzen der Kupplungsmuffe ausgebildete Anschlussöffnung auf. Auf diese Weise wird die fluidtechnische Verbindung zwischen dem von der Kupplungsmuffe aufgenommenen Rohr einerseits und dem vom Gehäuse bereitgestellten Verteilraum andererseits erreicht.

Das erfindungsgemäße System umfasst bevorzugter Weise eine Vielzahl von unterschiedlichen Gehäusetypen, die je nach Verwendungszweck ausgelegt sind. Es sind bevorzugter Weise in der Größe unterschiedliche Gehäuse vorgesehen. Die Bereitstellung eines an den jeweiligen Anwendungsfall in der Größe angepassten Verteilraumes ist so möglich. Darüber hinaus können die Gehäuse hinsichtlich der Ausgestaltung ihrer Anschlussöffnung variieren. So kann die Anschlussöffnung stirnseitig oder längsseitig, gegebenenfalls auch boden- oder deckelseitig ausgebildet sein. Dem im jeweiligen Anwendungsfall zur Verfügung stehenden Einbauraum kann so Rechnung getragen werden. All diese unterschiedlichen Gehäusetypen können nach dem erfindungsgemäßen System mit einer für sämtliche Gehäusetypen baugleichen Kupplungsmuffe ausgerüstet werden. Der Monteur am Einbauort erhält damit die Möglichkeit, mit nur wenigen Bauteilen die systemseitige Ausrüstung in einfacher Weise zu bewerkstelligen. Der Arbeitsaufwand wird damit im Unterschied zum Stand der Technik reduziert.

Die aus dem Stand der Technik nach der EP 1 275 993 B1 vorbekannte Konstruktion ist gleichviel komplizierter. Nach dieser Lösung sind für unterschiedliche Gehäuse unterschiedliche Kupplungsmuffen vorzusehen. Darüber hinaus ist es erforderlich, die Anschlussstutzen der einzelnen Kupplungsmuffen mit einer Montageplatte zu verschweißen. All diese Montagetätigkeiten können bei der Erfindung in vorteilhafter Weise vermieden werden.

Die Kupplungsmuffe besteht vorzugsweise aus Kunststoff. Sie kann aber auch aus Metall gebildet sein. In jedem Fall liegt sie für den Monteur vor Ort als einstückiges Bauteil vor und kann ohne weitere Nachbearbeitung Verwendung finden.

Es können gemäß einem weiteren Vorschlag der Erfindung Kupplungsmuffen mit im Durchmesser unterschiedlich groß ausgebildeten Anschlussstutzen vorgesehen sein. Es ist so ermöglicht, im Durchmesser unterschiedlich groß ausgebildete Rohre einzusetzen. Erfindungsgemäß können die Kupplungsmuffen aber unabhängig von der Größe ihres Anschlussstutzens wahlweise mit sämtlichen Gehäusetypen kombiniert werden. Es ist insofern gestattet, jeden Gehäusetyp mit im Durchmesser unterschiedlich groß ausgestalteten Anschlussstuzen auszurüsten, bzw. ein- und dieselbe Kupplungsmuffe mit sämtlichen zum erfindungsgemäßen Baukastensystem gehörenden Gehäusetypen zu kombinieren.

Das Gehäuse ist im endfertig montierten Zustand einer Tragstruktur angeordnet, beispielsweise an einem Mauerwerk. Zu diesem Zweck kommen standardisierte Befestigungsbügel zum Einsatz, die vorzugsweise L-förmig ausgebildet sind und ein für sämtliche Gehäusetypen gleichermaßen passendes Lochbild aufweisen. Es ist so in vorteilhafter Weise ermöglicht, den Befestigungsbügel für eine ordnungsgemäße Anordnung an einem Mauerwerk für sämtliche zum erfindungsgemäßen Baukastensystem gehörende Gehäusetypen einsetzen zu können. Auch hierdurch wird in vorteilhafter Weise die Montage am Einbauort vereinfacht.

Zur Anordnung eines Wellenrohres an der Kupplungsmuffe ist das Rohr in den von der Kupplungsmuffe bereitgestellten Anschlussstutzen einzuführen. Zur Fixierung des Rohres relativ gegenüber der Kupplungsmuffe dient ein Sicherungsbügel. Dieser ist erfingdungsgemäß U-förmig ausgebildet und verfügt neben einem Kopfabschnitt über zwei Stege. Im endfertig montierten Zustand durchgreifen diese Stege im Anschlussstutzen ausgebildete schlitzförmige Öffnungen. Dabei greifen die Stege in ein vom Wellenrohr bereitgestelltes Wellental ein, womit eine Lagefixierung des gewellt ausgebildeten Rohres relativ gegenüber dem Anschlussstutzen und damit gegenüber der Kupplungsmuffe erreicht ist.

Die Kupplungsmuffe ist im endmontierten Zustand mit einem zugehörigen Gehäuse vorzugsweise verschraubt. Zu diesem Zweck stellt die Anschlussplatte der Kupplungsmuffe Bohrungen zur Verfügung, durch die hindurch Befestigungsmittel, vorzugsweise Schrauben geführt werden können. Zur Abdichtung der Kupplungsmuffe gegenüber dem Gehäuse ist vorzugsweise eine zwischen Anschlussplatte und Gehäusewand anzuordnende Dichtung vorgesehen. Im endmontierten Zustand ist diese Dichtung zwischen Gehäusewand einerseits und Anschlussplatte andererseits eingeklemmt.

Weitere Vorteile und Merkmale der Erfindung ergeben sich aus der nachfolgenden Beschreibung anhand der Figuren. Dabei zeigen
- Figur 1: in schematisch perspektivischer Darstellung eine Luftverteileinrichtung nach dem erfindungsgemäßen System gemäß einer ersten Ausführungsform;
- Figur 2: in schematischer Draufsicht von unten die Luftverteileinrichtung nach Figur 1;
- Figur 3: in schematischer Schnittdarstellung die Luftverteileinrichtung gemäß Schnittlinie III-III nach Figur 2;
- Figur 4: in schematisch perspektivischer Darstellung eine Luftverteileinrichtung nach dem erfindungsgemäßen System gemäß einer zweiten Ausführungsform;
- Figur 5: in schematischer Draufsicht von unten die Luftverteileinrichtung nach Figur 4;
- Figur 6: in schematischer Schnittdarstellung die Luftverteileinrichtung gemäß Schnittlinie VI-VI nach Figur 5;
- Figur 7: in schematisch perspektivischer Darstellung eine Luftverteileinrichtung nach dem erfindungsgemäßen System gemäß einer dritten Ausführungsform;
- Figur 8: in schematischer Draufsicht von unten die Luftverteileinrichtung nach Figur 7;
- Figur 9: in schematischer Schittdarstellung die Luftverteileinrichtung gemäß Schnittlinie IX-IX nach Figur 8;
- Figur 10: in schematisch perspektivischer Darstellung das Gehäuse der Luftverteileinrichtung nach Figur 1;
- Figur 11: in schematisch perspektivischer Darstellung das Gehäuse der Luftverteileinrichtung nach Figur 4;
- Figur 12: in schematisch perspektivischer Darstellung das Gehäuse der Luftverteileinrichtung nach Figur 7;
- Figur 13: in schematisch perspektivischer Darstellung eine Kupplungsmuffe nach dem erfindungsgemäßen System;
- Figur 14: in schematischer Draufsicht von oben die Kupplungsmuffe nach Figur 13;
- Figur 15: in schematischer Schnittdarstellung die Kupplungsmuffe gemäß Schnittlinie XV-XV nach Figur 14;
- Figur 16: in schematisch perspektivischer Darstellung eine Dichtung nach dem erfindungsgemäßen System und
- Figur 17: in schematischer Seitenansicht einen Sicherungsbügel nach dem erfindungsgemäßen System.

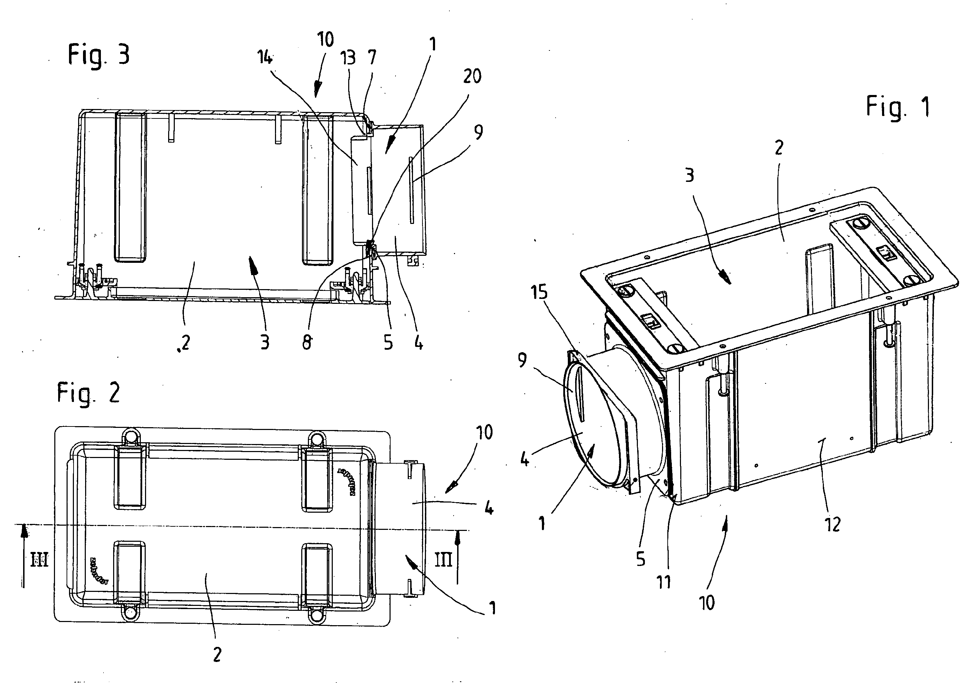

Figur 1 lässt in schematisch perspektivischer Darstelllung eine Luftverteileinrichtung 10 nach dem erfindungsgemäßen System erkennen. Die Luftverteileinrichtung 10 verfügt über ein Gehäuse 2 und eine Kupplungsmuffe 1. Die Kupplungsmuffe 1 ist verdrehfest an einer Wand des Gehäuses 2 angeordnet, welche Gehäusewand bei der Ausführung nach Figur 1 eine Stirnwand 11 des Gehäuses 2 ist.

Das Gehäuse 2 stellt einen Verteilraum 3 zur Verfügung. Im bestimmungsgemäßen Verwendungsfall ist das Gehäuse 2 oberseitig mittels einer Abdeckung verschlossen, die der besseren Übersicht wegen in den Figuren nicht dargestellt ist.

Für den strömungstechnischen Anschluss eines in den Figuren nicht näher dargestellten, gewellt ausgebildeten Rohres an den vom Gehäuse 2 bereitgestellten Verteilraum 3 dient die Kupplungsmuffe 1.

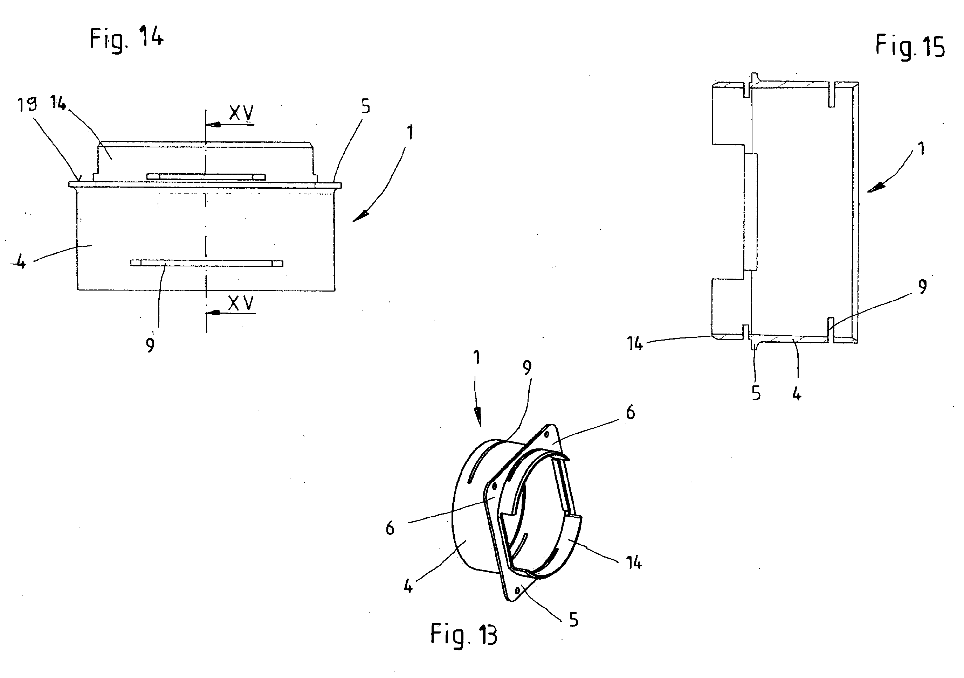

Die Kupplungsmuffe 1 ist im Detail in den Figuren 13, 14 und 15 dargestellt. Sie verfügt über einen Anschlussstutzen 4 und eine Anschlussplatte 5, wobei die Anschlussplatte 5 den Anschlussstutzen 4 trägt. Im bestimmungsgemäßen Verwendungsfall ist ein Wellenrohr in den Anschlussstutzen 4 der Kupplungsmuffe 1 eingeführt und dort positionssicher gehalten.

Wie insbesondere die Darstellung nach den Figuren 1 bis 3 erkennen lässt, greift die Kupplungsmuffe 1 im montierten Zustand mit davon bereitgestellten Fortsätzen 14 in eine Anschlussöffnung 13 des Gehäuses 2 ein. Dabei liegt die Anschlussplatte 5 mit einer gehäuseseitigen Teilfläche 19 unter Zwischenordnung einer Dichtung 7 an einer Anpressfläche 20 des Gehäuses 2 an, welche Anpressfläche 20 gehäuseseitig durch eine Aufnahme 8 gebildet ist. Im einfachsten Ausführungsbeispiel, welches in den Figuren dargestellt ist, ist die Anpressfläche 20 als Teil der Gehäusewand ausgebildet. Die die Anpressfläche 20 bereitstellende Aufnahme 8 ergibt sich in diesem Fall als der Überdeckungsbereich zwischen Gehäusewand einerseits und Anschlussplatte 5 andererseits. Es kann aber auch vorgesehen sein, die Anpressfläche 20 als Teil einer Aufnahme 8 auszugestalten, die gegenüber der Gehäusewand vertieft ausgebildet ist und beispielsweise eine Tiefe aufweist, die in Summe der Dicke der Anschlussplatte 5 und der Dichtung 7 entspricht.

Zur Anordnung der Kupplungsmuffe 1 am Gehäuse 2 ist die Anschlussplatte 5 der Kupplungsmuffe 1 mit Bohrungen 6 ausgerüstet, durch die im endmontierten Zustand Befestigungsmittel vorzugsweise in Form von Schrauben geführt sind.

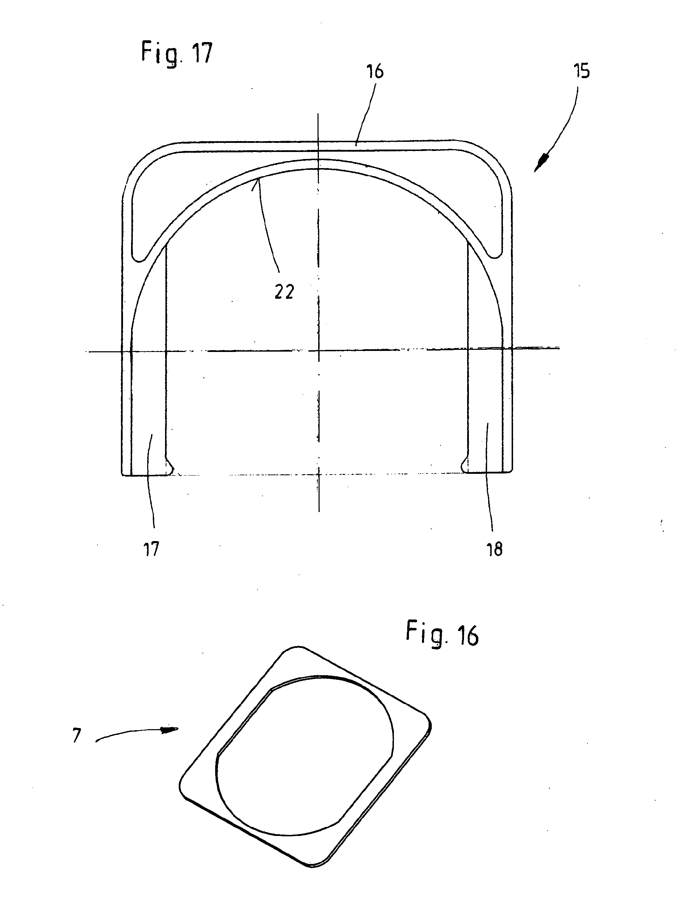

Zur Positionsfixierung eines vom Anschlussstutzen 4 der Kupplungsmuffe 1 aufgenommenen Wellenrohres dient ein Sicherungsbügel 15, wie er in Figur 17 dargestellt ist. Der Sicherungsbügel 15 ist U-förmig ausgebildet und verfügt über einen Kopfabschnitt 16 einerseits sowie zwei daran angeordnete Stege 17 und 18 andererseits. Die zu den Stegen 17 und 18 weisende Anschlussfläche 22 des Kopfabschnittes 16 ist teilkreisförmig ausgebildet und zwar in Entsprechung des Anschlussstutzens 4. Im endmontierten Zustand liegt der Sicherungsbügel 15 mit seiner Anschlussfläche 22 am Anschlussstutzen 4 an, wie sich beispielsweise aus der Darstellung nach Figur 1 ergibt.

Der Anschlussstutzen 4 verfügt über schlitzartige Ausnehmungen 9. Im endmontierten Zustand sind diese von den Stegen 17 und 18 des Sicherungsbügels 15 durchragt, wie dies beispielsweise den Figuren 1, 4 und 7 entnommen werden kann.

Ist ein in den Figuren nicht näher dargestelltes Wellenrohr in den Anschlussstutzen 4 der Kupplungsmuffe 1 eingesetzt, so greifen die Abschnitte der Stege 17 und 18 des Sicherungsbügels 15, die die schlitzförmigen Ausnehmungen durchragen, in ein vom Wellenrohr bereitgestelltes Wellental ein. Auf diese Weise ist eine Positionssicherung des Wellenrohres relativ gegenüber der Kupplungsmuffe 1 und damit auch gegenüber dem Gehäuse 2 erreicht.

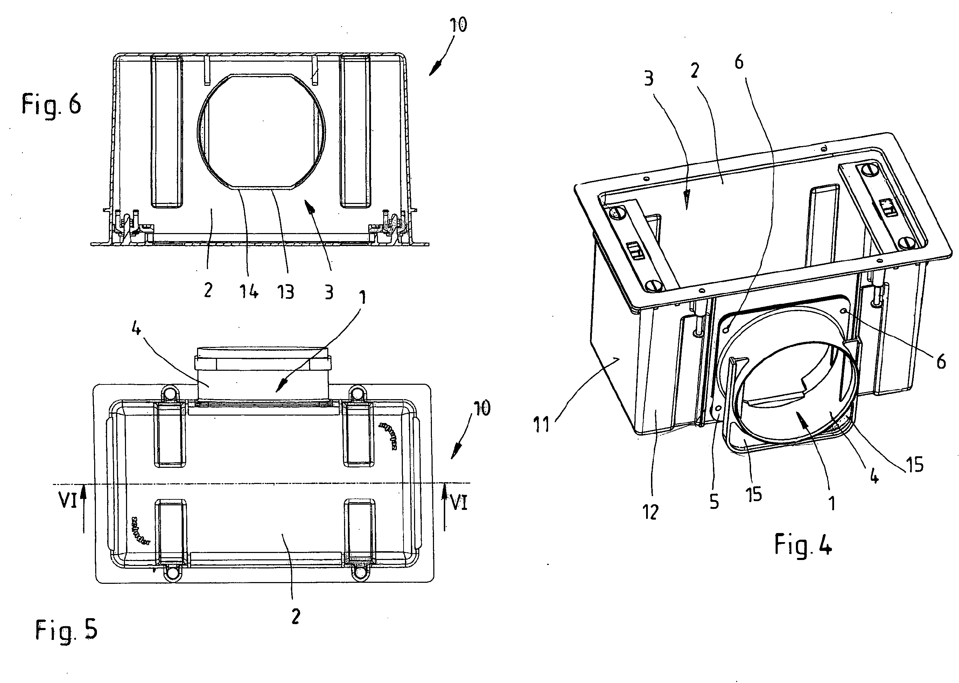

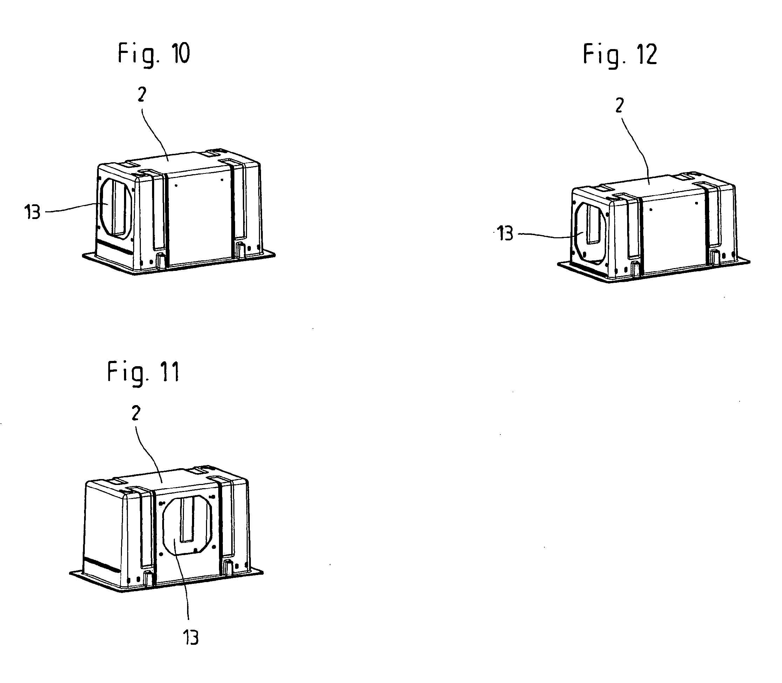

Die Figuren 1 bis 3 zeigen eine erste Ausführungsform eines Gehäuses. Die gleiche Gehäuseform ist in den Figuren 4 bis 6 gezeigt, wobei gemäß dieser Ausführungsform die Kupplungsmuffe 1 nicht an der Stirnseite 11 des Gehäuses 2, sondern an dessen Längsseite 12 angeordnet ist. Dementsprechend stellt das Gehäuse 2 die Anschlussöffnung 13 auch nicht stirnseitig, sondern längsseitig bereit, wie sich dies aus einer Zusammenschau der Figuren 10 und 11 ergibt.

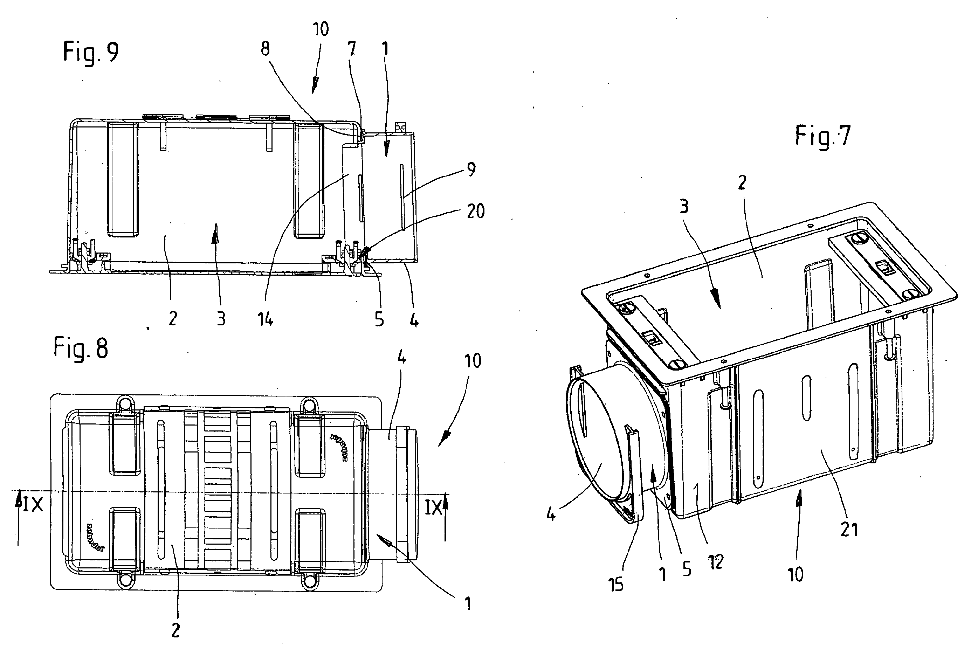

Die Ausführungsform nach den Figuren 7 bis 9 betrifft eine andere Gehäuseausgestaltung. Im Unterschied zur Gehäuseausgestaltung nach den Figuren 1 bis 6 ist das Gehäuse nach den Figuren 7 bis 9 niedriger ausgestaltet, das heißt der vom Gehäuse 2 bereitgestellte Verteilraum 3 ist kleiner. Die Anordnung der Kupplungsmuffe 1 gemäß der Ausführungsform nach den Figuren 7 bis 9 ist stirnseitig des Gehäuses 2 vorgesehen. Eine Anordnung der Kupplungsmuffe 1 an einer Längsseite 12 kann ebenfalls vorgesehen sein und stellt eine weitere Ausführungsform dar, die in den Figuren nicht näher dargestellt ist. Das Gehäuse 2 nach der Ausgestaltungsform gemäß den Figuren 7 bis 9 ist in Figur 12 näher dargestellt.

Wie die einzelnen Ausführungsformen nach den Figuren 1 bis 12 erkennen lassen, umfasst eine Luftverteileinrichtung 10 nach dem erfindungsgemäßen System ein Gehäuse 2 und eine Kupplungsmuffe 1, wobei unterschiedliche Gehäusetypen zum Einsatz kommen können. Dabei besteht die Besonderheit nach dem erfindungsgemäßen System darin, dass für unterschiedliche Gehäusetypen eine baugleiche Kupplungsmuffe 1 zum Einsatz kommt.

Zur Anordnung des Gehäuses 2 an einem Mauerwerk kommen vorzugsweise Befestigungsbügel 21 zum Einsatz, wie sie sich beispielsweise aus der Darstellung nach Figur 7 ergeben. Dabei sind die Befestigungsbügel 21 vorzugsweise standardisiert ausgeführt und verfügen über ein Lochbild, das es gestattet, mit baugleichen Befestigungsbügeln 21 unterschiedliche Gehäusetypen für eine bestimmungsgemäße Verwendung der Luftverteileinrichtung 10 an einem Mauerwerk anzuordnen.

Die Kupplungsmuffe 1 ist verdrehfest am Gehäuse 2 angeordnet. Dabei ist zur Abdichtung der Kupplungsmuffe 1 gegenüber dem Gehäuse 2 eine Dichtung 7 vorgesehen, die im endmontierten Zustand zwischen der Anschlussplatte 5, der Kupplungsmuffe 1 und der jeweiligen Gehäusewand des Gehäuses 2 eingeklemmt ist. Figur 16 lässt eine Dichtung 7 beispielhaft anhand einer schematischen Darstellung erkennen.

### Bezugszeichen:

- 1: Kupplungsmuffe
- 2: Gehäuse
- 3: Verteilraum
- 4: Anschlussstutzen
- 5: Anschlussplatte
- 6: Bohrung
- 7: Dichtung
- 8: Aufnahme
- 9: Ausnehmung
- 10: Luftverteileinrichtung
- 11: Stirnseite
- 12: Längsseite
- 13: Anschlussöffnung
- 14: Fortsatz
- 15: Sicherungsbügel
- 16: Kopfabschnitt
- 17: Steg
- 18: Steg
- 19: Teilfläche
- 20: Anpressfläche
- 21: Befestigungsbügel
- 22: Anschlussfläche

## Patentansprüche

1. System zur Fluid-, insbesondere Luftverteilung, mit einem einen Verteilraum (3) bereitstellenden Gehäuse (2) und einer Kupplungsmuffe (1) zum strömungstechnischen Anschluss eines gewellt ausgebildeten Rohres an den Verteilraum (3), wobei eine Mehrzahl von unterschiedlichen Gehäusetypen vorgesehen ist, die wahlweise mit einer für sämtliche Gehäusetypen baugleichen Kupplungsmuffe (1) kombinierbar ausgebildet sind,
**gekennzeichnet durch**
einen Sicherungsbügel (15) zur Fixierung des Rohrs relativ gegenüber der Kupplungsmuffe (1), der U-förmig ausgebildet ist und über einen Kopfabschnitt (16) einerseits sowie daran angeordnete Stege (17, 18) andererseits verfügt, wobei die zu den Stegen (17, 18) weisende Anschlussfläche (22) des Kopfabschnitts (16) teilkreisförmig ausgebildet ist und wobei die Stege (17, 18) jeweils endseitig einen Fortsatz tragen, welche Fortsätze einander zugewandt ausgerichtet sind.

2. System nach Anspruch 1, **dadurch gekennzeichnet, dass** die Kupplungsmuffe (1) über einen Anschlussstutzen (4) und eine Anschlussplatte (5) verfügt, wobei die Anschlussplatte (5) den Anschlussstutzen (4) trägt, wobei die Anschlussplatte (5) und der Anschlussstutzen (4) einstückig aus Kunststoff gebildet sind.

3. System nach Anspruch 1 oder 2, **dadurch gekennzeichnet, dass** der Anschlussstutzen (4) über schlitzartige Ausnehmungen (9) verfügt, die einander gegenüberliegend ausgebildet sind.

4. System nach Anspruch 3, **dadurch gekennzeichnet, dass** im endfertig montierten Zustand die Stege (17, 18) des Sicherungsbügels (15) die schlitzförmigen Ausnehmungen (9) des Anschlussstutzens (4) durchgreifen.

5. System nach einem der vorhergehenden Ansprüche, **dadurch gekennzeichnet, dass** im endmontierten Zustand der Sicherungsbügel (15) mit seiner Anschlussfläche (22) am Anschlussstutzen (4) anliegt.

6. System nach einem der vorhergehenden Ansprüche, **gekennzeichnet durch** einen für sämtliche Gehäusetypen baugleichen Befestigungsbügel zur Anordnung des Gehäuses (2) an einer Tragstruktur, vorzugsweise an einer Raumwand.

7. System nach Anspruch 6, **dadurch gekennzeichnet, dass** der Befestigungsbügel L-förmig ausgebildet ist und ein für sämtliche Gehäusetypen gleichermaßen passendes Lochbild aufweist.

8. System nach einem der vorhergehenden Ansprüche, **dadurch gekennzeichnet, dass** zur Abdichtung der Kupplungsmuffe (1) gegenüber dem Gehäuse (2) eine Dichtung (7) vorgesehen ist, die im endmontierten Zustand zwischen der Anschlussplatte (5) der Kupplungsmuffe (1) und der jeweiligen Gehäusewand des Gehäuses (2) eingeklemmt ist.

## Claims

1. A system for fluid, especially air distribution, comprising a housing (2) which provides a distribution room (3) and a coupling sleeve (1) for the fluidic connection of a corrugated pipe to the distribution room (3), wherein a plurality of different housing types is provided, which housing types are designed such that they can be optionally combined with a coupling sleeve (1) that is structurally equal for all housing types,
**characterized by**
a securing bracket (15) for fixing the pipe with respect to the coupling sleeve (1), which securing bracket is U-shaped and comprises a head section (16), on the one hand, and webs (17, 18) disposed thereon, on the other hand, wherein the connection surface (22) of the head section (16), which is pointing to the webs (17) and (18), is designed as a part-circle and wherein the webs (17, 18) respectively carry an extension at the ends, which extensions are oriented such that they are facing each other.

2. A system according to claim 1, **characterized in that** the coupling sleeve (1) comprises a connecting piece (4) and a connection plate (5), wherein the connection plate (5) carries the connecting piece (4), wherein the connection plate (5) and the connecting piece (4) are formed in one piece made of plastic.

3. A system according to claim 1 or 2, **characterized in that** the connecting piece (4) comprises slot-shaped recesses (9) which are facing each other.

4. A system according to claim 3, **characterized in that** in the finally mounted condition, the webs (17, 18) of the securing bracket (15) pass through the slot-shaped recesses (9) of the connecting piece (4).

5. A system according to one of the preceding claims, **characterized in that** in the finally mounted condition, the connection surface (22) of the securing bracket (15) rests against the connecting piece (4).

6. A system according to one of the preceding claims, **characterized by** a fastening bracket which is structurally identical for all housing types and which serves to mount the housing (2) on a support structure, preferably on a room wall.

7. A system according to claim 6, **characterized in that** the fastening bracket is L-shaped and comprises a hole pattern which is equally suitable for all housing types.

8. A system according to one of the preceding claims, **characterized in that** a gasket (7) is provided for sealing the coupling sleeve (1) with respect to the housing (2), which gasket is sandwiched between the connection plate (5) of the coupling sleeve (1) and the respective housing wall of the housing (2) in the finally mounted condition.

## Revendications

1. Système destiné à la distribution de fluide, notamment de l'air, comprenant un boîtier, qui fournit une chambre de distribution (3), et un manchon d'accouplement (1) pour le raccordement fluidique d'un tuyau ondulé à la chambre de distribution (3), une pluralité de types de boîtier différents étant prévue, les types de boîtier différents pouvant être combinés au choix avec un manchon d'accouplement (1) de construction identique pour tous les types de boîtier,
**caractérisé par**
un étrier de sécurité (15) destiné à fixer le tuyau par rapport au manchon d'accouplement (1), lequel étrier est sous forme de U et comprend une section de tête (16), d'une part, et des traverses (17, 18) disposées sur celle-ci, d'autre part, la surface de raccordement (22) de la section de tête (16) pointant vers les traverses (17, 18) étant partiellement circulaire et les traverses (17, 18) portant chacune une saillie à l'extrémité, lesquelles saillies se font face l'une à l'autre.

2. Système selon la revendication 1, **caractérisé en ce que** le manchon d'accouplement (1) comprend une tubulure de raccord (4) et une plaque de raccord (5), la plaque de raccord (5) portant la tubulure de raccord (4), et la plaque de raccord (5) et la tubulure de raccord (4) étant formées en une seule pièce en plastique.

3. Système selon la revendication 1 ou la revendication 2, **caractérisé en ce que** la tubulure de raccord (4) comprend des évidements (9) sous forme de fentes qui sont positionnés en vis-à-vis l'un à l'autre.

4. Système selon la revendication 3, **caractérisé en ce que** les traverses (17, 18) de l'étrier de sécurité (15) passent à travers les évidements (9) de la tubulure de raccord (4) à l'état finalement monté.

5. Système selon l'une des revendications précédentes, **caractérisé en ce que** la surface de raccordement (22) de l'étrier de sécurité (15) est placée contre la tubulure de raccord (4) à l'état finalement monté.

6. Système selon l'une des revendications précédentes, **caractérisé par** un étrier de fixation de construction identique pour tous les types de boîtier et destiné à disposer le boîtier (2) sur une structure de support, de préférence une paroi d'une pièce.

7. Système selon la revendication 6, **caractérisé en ce que** l'étrier de fixation est sous forme de L et comprend une configuration de perçage également appropriée pour tous les types de boîtier.

8. Système selon l'une des revendications précédentes, **caractérisé en ce qu'**un joint d'étanchéité (7) est prévu pour étancher le manchon d'accouplement (1) par rapport au boîtier (2), lequel joint est coincé entre la plaque de raccord (5) du manchon d'accouplement (1) et la paroi de boîtier respective du boîtier (2) à l'état finalement monté.
